# EUROPEAN PATENT APPLICATION

(11) **EP 4 227 897 A1**
(43) Date of publication of application: **16.08.2023**
(21) Application number: 23151695.6
(22) Date of filing: 16.01.2023
(51) Int. Cl.: G06T 7/00

(54) **INSPECTION APPARATUS**

(30) Priority: 14.02.2022 JP 2022020721
(71) Applicant: Subaru Corporation, Tokyo 150-8554 (JP)
(72) Inventor: SAKO, Shoichiro, Tokyo, 150-8554 (JP); TANAKA, Yuki, Tokyo, 150-8554 (JP); YOSHIDA, Keisuke, Tokyo, 150-8554 (JP)
(74) Representative: Vossius & Partner Patentanwälte Rechtsanwälte mbB

(57) **Abstract**

An inspection apparatus is configured to inspect an inspection target including an attachment body and a specific part attached to the attachment body. A surface of the attachment body and a surface of the specific part are painted with a same color material. The inspection apparatus including a storage device, an imaging device, and an image processing device. The storage device is configured to store in advance a reference image in which the attachment body and the specific part are captured in a state in which the specific part is correctly attached to the attachment body. The imaging device is configured to capture an inspection image of the inspection target. The image processing device is configured to determine incorrect attachment of the specific part in the inspection target based on the inspection image captured by the imaging device and the reference image stored in the storage device.

## Description

### BACKGROUND

### Technical Field

The disclosure relates to an inspection apparatus and an inspection method for inspecting the incorrect attachment of parts.

### Related Art

For example, Japanese Unexamined Patent Application Publication No. 2017-172984 discloses an appearance inspection system configured to photograph a to-be-inspected object with a camera and to determine the attachment state of a part in the to-be-inspected object based on the photographed image.

### SUMMARY

An aspect of the disclosure provides an inspection apparatus configured to inspect an inspection target including an attachment body and a specific part attached to the attachment body. A surface of the attachment body and a surface of the specific part are painted with a same color material. The inspection apparatus includes a storage device, an imaging device, and an image processing device. The storage device is configured to store in advance a reference image in which the attachment body and the specific part are captured in a state in which the specific part is correctly attached to the attachment body. The imaging device is configured to capture an inspection image of the inspection target. The image processing device is configured to determine incorrect attachment of the specific part in the inspection target based on the inspection image captured by the imaging device and the reference image stored in the storage device.

An aspect of the disclosure provides an inspection method of determining incorrect attachment of a specific part attached to an attachment body, a surface of the attachment body and a surface of the specific part being painted with a same color material, the attachment body and the specific part serving as an inspection target. The inspection method includes: capturing an inspection image of the inspection target; and determining the incorrect attachment of the specific part in the inspection target based on the captured inspection image and a reference image stored in the storage device. The reference image is an image in which the attachment body and the specific part are imaged in a state in which the specific part is correctly attached to the attachment body.

### BRIEF DESCRIPTION OF THE DRAWINGS

The accompanying drawings are included to provide a further understanding of the disclosure and are incorporated in and constitute a part of this specification. The drawings illustrate an embodiment and, together with the specification, serve to describe the principles of the disclosure.
FIG. 1 is a schematic diagram illustrating the configuration of an inspection system according to an embodiment;
FIG. 2 is a diagram explaining a method of determining the incorrect attachment of specific parts;
FIG. 3 is a flowchart explaining the flow of the operation of an image processing device; and
FIG. 4 is a flowchart explaining the flow of an incorrect attachment determination process.

### DETAILED DESCRIPTION

In an aircraft manufacturing process, the step of attaching a specific part such as a bracket to an attachment body such as the body of an aircraft is performed, and, after this attachment step, the step of inspecting whether the specific part is correctly attached may be performed.
In the inspection step, whether the specific part is incorrectly attached may be inspected by visual inspection by an inspector.

Here, the surface of the body of the aircraft and the surface of the bracket attached to the body may be painted with the same color material. If the surface of the attachment body such as the body of the aircraft and the surface of the specific part such as the bracket have the same color, it is difficult to distinguish the specific part from the attachment body. For this reason, there is a risk of overlooking the incorrect attachment of the specific part in the inspection step.

It is desirable to provide an inspection apparatus and an inspection method capable of appropriately inspecting the incorrect attachment of a specific part to an attachment body.

In the following, an embodiment of the disclosure is described in detail with reference to the accompanying drawings. Note that the following description is directed to an illustrative example of the disclosure and not to be construed as limiting to the disclosure. Factors including, without limitation, numerical values, shapes, materials, components, positions of the components, and how the components are coupled to each other are illustrative only and not to be construed as limiting to the disclosure. Further, elements in the following example embodiment which are not recited in a most-generic independent claim of the disclosure are optional and may be provided on an as-needed basis. The drawings are schematic and are not intended to be drawn to scale. Throughout the present specification and the drawings, elements having substantially the same function and configuration are denoted with the same numerals to avoid any redundant description.

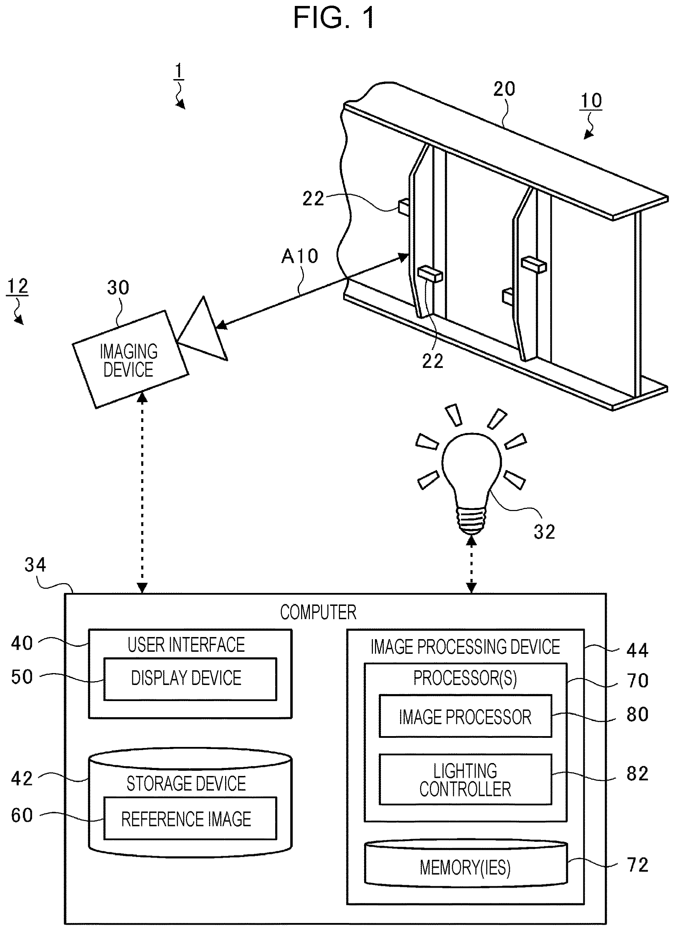

FIG. 1 is a schematic diagram illustrating the configuration of an inspection system 1 according to the present embodiment. The inspection system 1 includes an inspection target 10 and an inspection apparatus 12.

The inspection target 10 includes an attachment body 20 and specific parts 22. The inspection target 10 in a correct state includes the specific parts 22 attached at certain positions of the attachment body 20. The attachment body 20 is, for example, a portion of the body of an aircraft, but may be any structure. FIG. 1 illustrates a portion of the body of an aircraft as an example of the attachment body 20. The specific parts 22 are, for example, brackets, but may be any parts realizing a product.

Moreover, the surface of the attachment body 20 and the surface of the specific parts 22 are painted with the same color material, as in the case of being painted with the same color paint. As the same color material, for example, color deviations that are generally recognized as the same color, such as having the same material model number, part number, or color number, are accepted.

For example, a green primer is applied to the surface of the attachment body 20, and also the same green primer as the primer applied to the surface of the attachment body 20 is applied to the surface of the specific parts 22. Note that the color of a primer applied to the surface of the attachment body 20 and to the surface of the specific parts 22 is not limited to green, and may be any color realizing a product.

As described above, in the present embodiment, the specific parts 22 are attached to the attachment body 20, the surface of the attachment body 20 and the surface of the specific parts 22 are painted with the same color material, and the attachment body 20 and the specific parts 22 serve as the inspection target 10.

Here, for example, in an aircraft manufacturing process, the step of attaching the specific parts 22 to the attachment body 20 may be performed. In the attachment step as above, the specific parts 22, which are designed in advance, are attached at the pre-designed positions of the attachment body 20. After the attachment step is performed, the step of inspecting whether the specific parts 22 have been correctly attached may be performed. The inspection target 10 mentioned above includes the specific parts 22 attached to the attachment body 20 in the attachment step, and is a target to be inspected in the inspection step.

The inspection apparatus 12 inspects the inspection target 10 mentioned above to determine whether the specific parts 22 are correctly attached, in other words, whether the specific parts 22 are incorrectly attached.

The inspection apparatus 12 includes an imaging device 30, a lighting device 32, and a computer 34. The imaging device 30 includes an imaging element. The imaging device 30 is disposed in front of the inspection target 10. The imaging device 30 is disposed at a distance from the surface of the inspection target 10, as indicated by a two-way arrow A10 in FIG. 1. The imaging device 30 is disposed so that the direction from the imaging device 30 toward the inspection target 10 is the imaging direction, and the imaging device 30 is able to capture an image of the inspection target 10. The imaging device 30 is electrically coupled to the computer 34, and is able to send the captured image to the computer 34.

The lighting device 32 includes a light source that can emit light, such as a light bulb, a light-emitting diode (LED) light, and a fluorescent light. The lighting device 32 is disposed at a position at which light can be emitted to the entire surface of the inspection target 10, and emits light to the inspection target 10.

The computer 34 is, for example, a personal computer. The computer 34 includes a user interface 40, a storage device 42, and an image processing device 44.

The user interface 40 includes a display device 50, such as a liquid crystal display or an organic electroluminescent (EL) display. The display device 50 displays various images or various types of information. Note that the user interface 40 may include, beside the display device 50, an output device that presents various types of information to the user, such as a loudspeaker. In addition, the user interface 40 may include an input device such as a keyboard or a mouse that receives operations performed by the user.

The storage device 42 includes a non-volatile storage element. Note that the non-volatile storage element may include an electrically readable/rewritable non-volatile storage element such as flash memory. The storage device 42 stores in advance a reference image 60. The reference image 60 is an image in which the attachment body 20 and the specific parts 22 are captured in a state in which the specific parts 22 are correctly attached to the attachment body 20. In short, the reference image 60 is an image that serves as a reference for determining the incorrect attachment of the specific parts 22 in inspecting the inspection target 10.

The image processing device 44 includes one or more processors 70 and one or more memories 72 connected to the processor(s) 70. The memory(ies) 72 includes read-only memory (ROM) storing programs and the like and random-access memory (RAM) serving as a work area. The processor(s) 70 cooperates with the programs included in the memory(ies) 72 to realize various functions such as image processing. For example, the processor(s) 70 executes the programs to function as an image processor 80 and a lighting controller 82.

The image processor 80 reads the reference image 60 from the storage device 42, and obtains an inspection image 90 in which the inspection target 10 is captured by the imaging device 30. The image processor 80 determines the incorrect attachment of the specific parts 22 in the inspection target 10 based on the inspection image 90 in which the inspection target 10 is captured by the imaging device 30 and the reference image 60 stored in the storage device 42. The method of determining the incorrect attachment of the specific parts 22 will be described in detail later.

The lighting device 32 is electrically coupled to the computer 34, and the lighting controller 82 is capable of controlling the lighting condition of the lighting device 32. The lighting condition may be any condition regarding lighting, such as the illuminance of the lighting device 32 or the relative position of the lighting device 32 with respect to the inspection target 10.

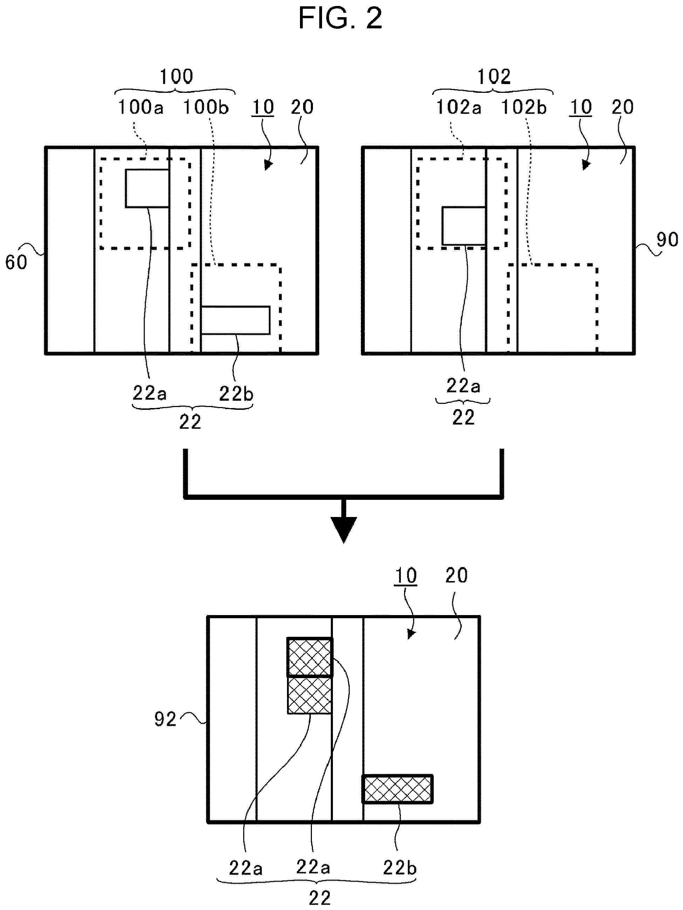

FIG. 2 is a diagram explaining the method of determining the incorrect attachment of the specific parts 22. The upper left image in FIG. 2 illustrates an example of the reference image 60 stored in the storage device 42. The upper right image in FIG. 2 illustrates an example of the inspection image 90 in which the inspection target 10 is captured by the imaging device 30. The lower center image in FIG. 2 illustrates an example of a display image 92, which indicates the result of determination displayed on the display device 50 after the incorrect attachment determination is performed.

In the example of the reference image 60 illustrated in FIG. 2, two specific parts 22, a specific part 22a and a specific part 22b, are attached to the attachment body 20. In contrast, in the example of the inspection image 90 illustrated in FIG. 2, the specific part 22a identical to the specific part 22a in the reference image 60 is attached at a position shifted downward from the position of the specific part 22a in the reference image 60. Moreover, in the example of the inspection image 90 illustrated in FIG. 2, the specific part 22b in the reference image 60 is not attached to the attachment body 20.

In the reference image 60, images of the specific parts 22 in the reference image 60 are identified in advance. In the reference image 60, for each specific part 22, a specific area containing an image of the specific part 22 in the reference image 60 is set. If there are multiple images of specific parts 22 in the reference image 60, multiple specific areas are set. In short, an image of each specific part 22 in the reference image 60 and a specific area are associated with each other in the reference image 60. A specific area is set to a range where the entire image of each specific part 22 fits. A specific area has a size of 100 vertical pixels by 100 horizontal pixels in the reference image 60, for example. Note that the size of a specific area is not limited to the size illustrated as an example, and may be set to any size so that each specific part 22 fits within the specific area.

The image processor 80 obtains a first image 100 partitioned by a specific area in the reference image 60. The first image 100 has the same size as a specific area. Because a specific area set in the reference image 60 and an image of each specific part 22 in the reference image 60 are associated with each other, the first image 100 contains the image of the specific part 22.

In addition, the image processor 80 obtains a second image 102 partitioned in the inspection image 90 by an area corresponding to a specific area. An area corresponding to a specific area has the same size as the specific area. In short, the image processor 80 obtains, from the inspection image 90, an image at the same position and within the same range as the position and range of the first image 100 as the second image 102.

For example, the image processor 80 obtains a first image 100a containing an image of the specific part 22a and a second image 102a at a position corresponding to the first image 100a. The image processor 80 determines the incorrect attachment of the specific part 22a based on the hue (H) component and the saturation (S) component of the hue, saturation, and value (HSV) color space of the first image 100a and the hue (H) component and the saturation (S) component of the HSV color space of the second image 102a while omitting the value (V) component of the HSV color space of the first image 100a and the value (V) component of the HSV color space of the second image 102a.

More precisely, the image processor 80 selects any pixel in the first image 100a, and obtains the hue component and the saturation component of the selected pixel. The image processor 80 selects a pixel in the second image 102a corresponding to the pixel selected in the first image 100a, and obtains the hue component and the saturation component of the selected pixel in the second image 102a. The image processor 80 derives the hue difference value by subtracting the hue component of the pixel in the second image 102a from the hue component of the pixel in the first image 100a and obtaining the absolute value thereof. In addition, the image processor 80 derives the saturation difference value by subtracting the saturation component of the pixel in the second image 102a from the saturation component of the pixel in the first image 100a and obtaining the absolute value thereof.

The image processor 80 determines that the selected pixel in the first image 100a and the selected pixel in the second image 102a match within an acceptable margin of error if the derived hue difference value is less than a certain hue threshold and the derived saturation difference value is less than a certain saturation threshold. The certain hue threshold here is set within, for example, a margin of error to an extent that the hue components are considered to match. The certain saturation threshold is set within, for example, a margin of error to an extent that the saturation components are considered to match.

In contrast, the image processor 80 determines that the selected pixel in the first image 100a and the selected pixel in the second image 102a are beyond the acceptable margin of error and do not match in the case where at least the derived hue difference value is greater than or equal to the certain hue threshold. In addition, the image processor 80 determines that the selected pixel in the first image 100a and the selected pixel in the second image 102a are beyond the acceptable margin of error and do not match in the case where at least the derived saturation difference value is greater than or equal to the certain saturation threshold.

The image processor 80 sequentially changes the pixels in the first image 100a and the second image 102a that are subjected to comparison for deriving the hue difference value and the saturation difference value. In short, the image processor 80 compares the hue and the saturation of each pixel in the first image 100a and the second image 102a to derive the hue difference value and the saturation difference value. Accordingly, the image processor 80 is able to determine whether the first image 100a and the second image 102a match in units of pixels in the first image 100a and the second image 102a.

Here, as described above, the surface of the attachment body 20 and the surface of the specific part 22a are painted with the same color primer. However, by attaching the specific part 22a to the attachment body 20, the direction of light hitting the surface of the specific part 22a and the direction of light reflected from the surface of the specific part 22a become different from the angle of light hitting the surface of the attachment body 20 and the angle of light reflected from the surface of the attachment body 20. Therefore, the hue of the specific part 22a in the inspection image 90 tends to be different from the hue of the attachment body 20 in the inspection image 90, and the saturation of the specific part 22a in the inspection image 90 tends to be different from the saturation of the attachment body 20 in the inspection image 90.

From the above, even if the surface of the attachment body 20 and the surface of the specific part 22a are painted with the same color primer, the image processor 80 is able to distinguish the attachment body 20 and the specific part 22a in the inspection image 90 based on the hue components and the saturation components.

Then, for example, if there is no specific part 22a at a position at which the specific part 22a is intended to be attached, it is estimated that the hue component and the saturation component of a pixel in the specific part 22a in the reference image 60 do not match the hue component and the saturation component of a pixel in the attachment body 20 in the inspection image 90 at a position at which the specific part 22a is intended to be attached.

In short, the image processor 80 is able to distinguish whether the first image 100a and the second image 102a match pixel by pixel by comparing the first image 100a and the second image 102a based on the hue components and the saturation components of the HSV color space.

The result of a failure to match based on the above comparison indicates that the incorrect attachment of the specific part 22a is possible, such as the case where, although there is the specific part 22a at the position of a pixel in the first image 100a, there is no specific part 22a at the position of a corresponding pixel in the second image 102a.

Moreover, in an environment where disturbance light from a light source different from the lighting device 32, such as natural light, is emitted to the inspection target 10, depending on the intensity of the disturbance light, the value in the second image 102a in the inspection image 90 may change significantly. This is taken into consideration, and no difference value is derived for the value components of the HSV color space, and no value components are used for determining whether the first image 100a and the second image 102a match. Therefore, even in the case where the inspection image 90 where the inspection target 10 is irradiated with disturbance light is used, the image processor 80 can appropriately compare the first image 100a and the second image 102a while minimizing the influence thereof.

As described above, the surface of the attachment body 20 and the surface of the specific part 22a are painted with the same color primer, and the image processor 80 determines pixel by pixel whether the first image 100a and the second image 102a match. Here, depending on how light hits the specific part 22a in the inspection target 10, the difference between the hue and saturation of the attachment body 20 and the hue and saturation of the specific part 22a in the inspection image 90 may be small, and it may be possible to determine differently from the actual attachment state in some of the pixels in the inspection image 90. In such a case, in images within the range of the specific part 22a in the inspection image 90, pixels determined to match and pixels determined not to match may coexist.

To this end, the image processor 80 determines, for all the pixels, whether the first image 100a and the second image 102a match, and derives the number of pixels determined not to match in the first image 100a and the second image 102a.

If the number of pixels determined not to match is less than a certain number, the image processor 80 determines that the specific part 22a is not incorrectly attached in the first image 100a and the second image 102a, that is, in the specific area. In contrast, if the number of pixels determined not to match is greater than or equal to the certain number, the image processor 80 determines that the specific part 22a is incorrectly attached in the first image 100a and the second image 102a, that is, in the specific area. The certain number may be set to any number within a range where it can be estimated that a set of pixels is indicative of the specific part 22a.

The image processor 80 performs the above-described pixel-by-pixel comparison for deriving the difference value and determination whether the number of pixels determined not to match is less than the certain threshold in a first image 100b containing the specific part 22b and a second image 102b corresponding to the first image 100b, as in the first image 100a and the second image 102a. That is, the image processor 80 determines, for every first image 100 containing an image of a specific part 22, whether the specific part 22 is incorrectly attached.

After performing the incorrect attachment determination, the image processor 80 displays the display image 92 indicating the determination result, such as an example of the display image 92 at the bottom center in FIG. 2, on the display device 50. For example, the image processor 80 superimposes the reference image 60 and the inspection image 90 one over the other to generate the display image 92. At this time, the image processor 80 highlights the pixels determined not to match using a certain display mode, as illustrated by way of example by cross-hatching in the display image 92 illustrated in FIG. 2. Note that the specific display mode of highlighting is not limited to cross-hatching, and may be any display mode, such as filling and displaying with a specific color. This enables the user to easily grasp, in the display image 92, the portion estimated to have the incorrect attachment.

In addition, in the case where the number of pixels determined not to match is greater than or equal to the certain number, the image processor 80 may display the specific part 22 in the first image 100 satisfying that condition using a specific display mode. For example, the image processor 80 may surround the outer edge of the image of the specific part 22 in the first image 100 satisfying that condition with a frame in a specific color. Note that the display mode is not limited to surrounding with a frame in a specific color, and the image processor 80 may display the specific part 22 using any display mode in which the specific part 22 can be identified. This enables the user to more easily grasp the specific part 22 determined to be incorrectly attached.

Here, it is preferable that the size of an image of each specific part 22 in the reference image 60 and the inspection image 90 be 14 pixels or more in the vertical direction and 32 pixels or more in the horizontal direction (14 vertical pixels or more by 32 horizontal pixels or more). The results of experiments have revealed that the incorrect attachment of a specific part 22 is highly accurately detectable if the size of the specific part 22 in the reference image 60 and the inspection image 90 is greater than or equal to the foregoing size. In short, by having this condition, the incorrect attachment of a specific part 22 is highly accurately detectable.

In addition, it is preferable that the distance from the imaging device 30 to the inspection target 10 be less than or equal to a distance in which the size of an image of each specific part 22 in the inspection image 90 is 14 pixels or more in the vertical direction and 32 pixels or more in the horizontal direction. For example, in the case where the actual size of a specific part 22 is 9 cm in the vertical direction and 20 cm in the horizontal direction, it is preferable that the distance from the imaging device 30 to the inspection target 10 be less than or equal to 600 cm. By setting the distance from the imaging device 30 to the inspection target 10 to 600 cm or less, if the imaging device 30 captures an image of the specific part 22 which is 9 cm in the vertical direction and 20 cm in the horizontal direction, the size of an image of the specific part 22 in the inspection image 90 becomes 14 pixels or more in the vertical direction and 32 pixels or more in the horizontal direction. By having the condition as above, the incorrect attachment of the specific part 22 is detectable with high accuracy.

Here, let the average value of the red, green, and blue (RGB) values of a pixel in the second image 102 be the luminance index. For example, the image processing device 44 selects any pixel in the second image 102, adds the R value, G value, and B value of the pixel to derive the total value, and divides the total value by three to derive the luminance index of the pixel. The image processing device 44 derives such a luminance index for all the pixels in the second image 102. Because the R value, G value, and B value have 256 shades, the luminance index also has 256 shades.

It is preferable that the luminance index in the second image 102 be any value within the range of 150 ± 15 among the 256 shades. More precisely, it is preferable that this condition be satisfied for all the pixels in the second image 102. Having this condition makes the hue component and the saturation component of each pixel in the second image 102 to be appropriate values, and, as a result, the difference value derivation and the incorrect attachment determination can be performed in a more appropriate manner.

Moreover, the image processor 80 may determine whether the luminance index in the second image 102 falls within the above range every time the image processor 80 obtains the second image 102. If the luminance index does not fall within the above range, the lighting controller 82 may adjust the lighting condition of the lighting device 32 based on the luminance index.

For example, if the luminance index is less than 135 (150-15=135), the lighting controller 82 may increase the illuminance of the lighting device 32 or may move the lighting device 32 closer to the inspection target 10. Moreover, if the luminance index is greater than 165 (150+15=165), the lighting controller 82 may decrease the illuminance of the lighting device 32 or may move the lighting device 32 away from the inspection target 10. By performing the incorrect attachment determination based on the second image 102 after the lighting condition has been adjusted, the image processor 80 can more appropriately perform the incorrect attachment determination.

Note that the mode in which the lighting controller 82 adjusts the lighting condition is not the only possible mode. For example, if the luminance index does not fall within the above range, the image processing device 44 may display that fact on the display device 50. In that case, the user who has checked that display may operate the lighting device 32 to adjust the lighting condition.

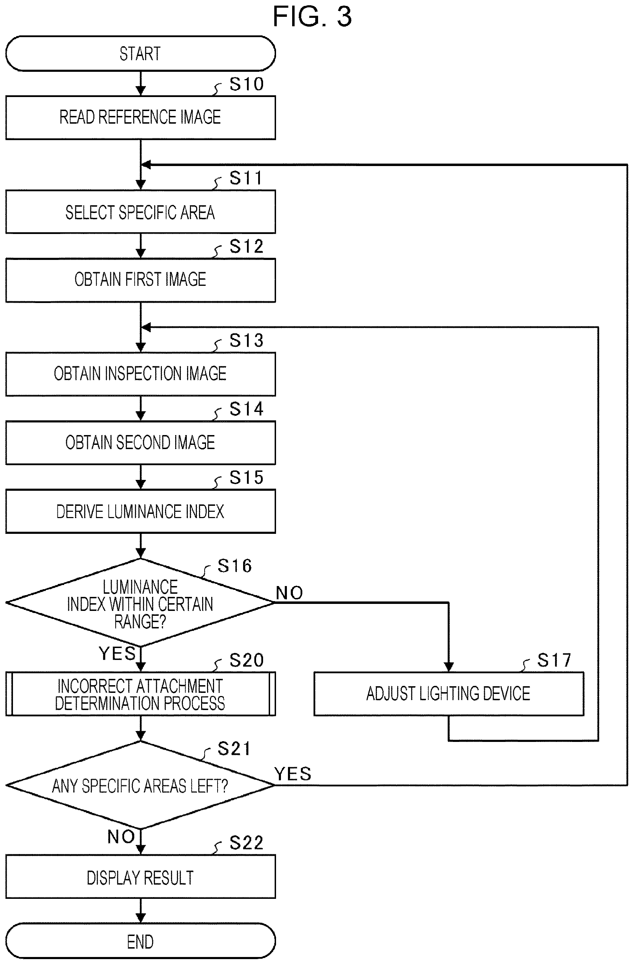

FIG. 3 is a flowchart explaining the flow of the operation of the image processing device 44. The image processor 80 of the image processing device 44 starts the series of processes illustrated in FIG. 3 in response to, for example, receipt of a certain input indicating the start of inspection through the user interface 40.

At first, the image processor 80 reads the reference image 60 from the storage device 42 (S10). In the reference image 60, for each specific part 22, a specific area containing an image of the specific part 22 is set in advance. The image processor 80 selects any one specific area from among the specific areas set in the reference image 60 (S11).

Based on the selected specific area, the image processor 80 obtains the first image 100 from the reference image 60 (S12).

Next, the image processor 80 obtains an image captured by the imaging device 30 as the inspection image 90 (S13). Based on the specific area selected in step S11, the image processor 80 obtains the second image 102 from the inspection image 90 (S13).

Next, the image processor 80 derives the luminance index for each pixel in the obtained second image 102 (S15). For example, the image processor 80 selects any pixel in the second image 102, derives the luminance index of the pixel by averaging the RGB values of the selected pixel, and similarly derives the luminance index for all the pixels in the second image 102.

Next, the image processor 80 determines whether the derived luminance index falls within a certain range (S16). The certain range of the luminance index is, for example, the range of 150 ± 15. More precisely, it is preferable that the image processor 80 determine whether the luminance index of all the pixels in the second image 102 falls within the certain range. Note that the image processor 80 may determine in step S16 that the luminance index falls within the certain range if the luminance index of a certain number of pixels or more in the second image 102 falls within the certain range, not just all the pixels in the second image 102.

If the luminance index does not fall within the certain range (NO in S16), the lighting controller 82 adjusts the lighting condition of the lighting device 32 based on the luminance index (S17). After the adjustment of the lighting condition, the image processor 80 returns to the process in step S13 and obtains the inspection image 90 again (S13).

If the luminance index falls within the certain range (YES in S16), the image processor 80 executes an incorrect attachment determination process (S20). The incorrect attachment determination process is a process of determining whether the specific part 22 has been incorrectly attached in the specific area set in step 511. The incorrect attachment determination process will be described in detail later.

After the incorrect attachment determination process, the image processor 80 determines whether there are any unselected specific areas left (S21). If there are specific areas left (YES in S21), the image processor 80 returns to step S11 and selects any one specific area from among the specific areas left (S11).

If there are no specific areas left (NO in S21), the image processor 80 generates the display image 92 based on the result of the incorrect attachment determination process, displays the generated display image 92 on the display device 50 (S22), and ends the series of processes. At this time, the image processor 80 may generate the display image 92 by applying image processing such as highlighting to the pixels of a portion that may be incorrectly attached.

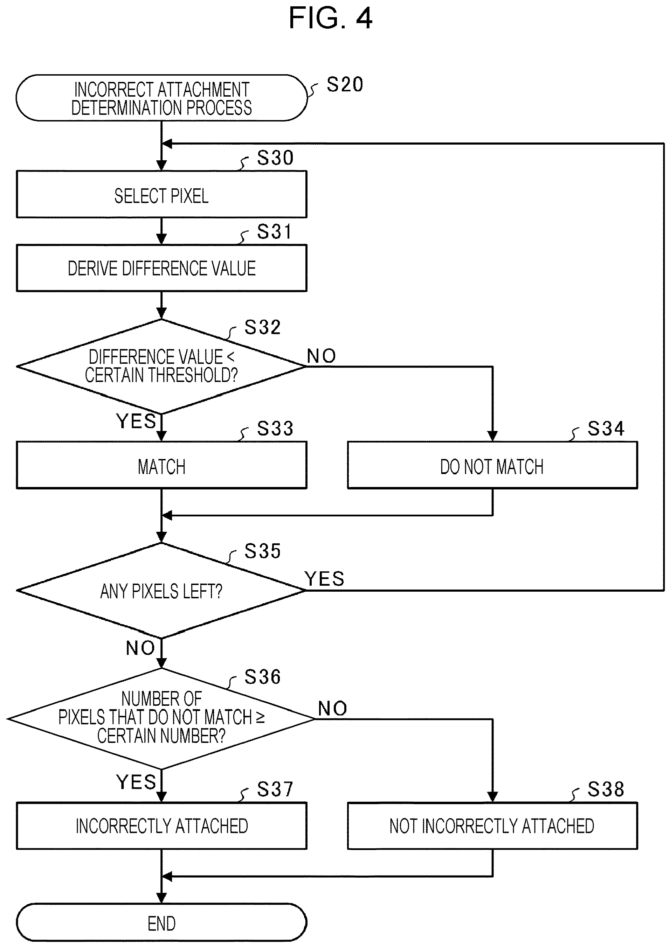

FIG. 4 is a flowchart explaining the flow of the incorrect attachment determination process (S20). When the incorrect attachment determination process starts, the image processor 80 selects any one pixel within the selected specific area (S30). For example, the image processor 80 selects any one pixel in the first image 100, and selects a pixel in the second image 102 at a position corresponding to the pixel selected in the first image 100.

The image processor 80 derives the hue difference value between the hue of the selected pixel in the first image 100 and the hue of the selected pixel in the second image 102, and derives the saturation difference value between the saturation of the selected pixel in the first image 100 and the saturation of the selected pixel in the second image 102 (S31) .

The image processor 80 determines whether the hue difference value is less than a certain hue threshold and the saturation difference value is less than a certain saturation threshold (S32).

If the hue difference value is less than the certain hue threshold and the saturation difference value is less than the certain saturation threshold (YES in S32), the image processor 80 determines that the selected pixel in the first image 100 and the selected pixel in the second image 102 match within an acceptable margin of error (S33).

If at least one of the hue difference value is greater than or equal to the certain hue threshold and the saturation difference value is greater than or equal to the certain saturation threshold (NO in S32), the image processor 80 determines that the selected pixel in the first image 100 and the selected pixel in the second image 102 are beyond the acceptable margin of error and do not match (S34) .

After step S33 or step S34, the image processor 80 determines whether there are unselected pixels left in the specific area (S35).

If there are pixels left (YES in S35), the image processor 80 selects any one pixel from among the pixels left (S30), and repeats the processes from step S31 onward.

If there are no pixels left (NO in S35), the image processor 80 determines whether the number of pixels determined not to match in step S34 is greater than or equal to a certain number (S36). The determination in step S36 corresponds to determining whether the ratio of the number of pixels determined not to match to the total number of pixels in the specific area is greater than or equal to a certain ratio.

If the number of pixels determined not to match is greater than or equal to the certain number (YES in S36), the image processor 80 determines that the specific part 22 is incorrectly attached in the specific area (S37), and ends the incorrect attachment determination process.

If the number of pixels determined not to match is less than the certain number (NO in S36), the image processor 80 determines that the specific part 22 is not incorrectly attached in the specific area (S38), and ends the incorrect attachment determination process.

As described above, the inspection apparatus 12 of the present embodiment regards the attachment body 20 and the specific part 22 attached thereto, the surface of the attachment body 20 and the surface of the specific part 22 being painted with the same color material, as the inspection target 10, and inspects the incorrect attachment of the specific part 22 in the inspection target 10. The inspection apparatus 12 of the present embodiment determines the incorrect attachment of the specific part 22 in the inspection target 10 based on the inspection image 90 in which the inspection target 10 is captured by the imaging device 30 and the reference image 60 stored in the storage device 42.

The inspection apparatus 12 of the present embodiment can appropriately determine the incorrect attachment of the specific part 22 from the reference image 60 and the inspection image 90 even if the attachment body 20 and the specific part 22 attached to the attachment body 20 are painted with the same color material. Therefore, according to the inspection apparatus 12 of the present embodiment, the incorrect attachment of the specific part 22 to the attachment body 20 can be appropriately inspected.

In addition, in the inspection apparatus 12 of the present embodiment, a specific area is set based on an image of each specific part 22 in the reference image 60. The image processing device 44 of the present embodiment determines the incorrect attachment of the specific part 22 in the inspection target 10 based on the hue component and the saturation component of the HSV color space of the first image 100, which is partitioned by the specific area in the reference image 60, and the hue component and the saturation component of the HSV color space of the second image 102, which is partitioned in the inspection image 90 by an area corresponding to the specific area, while omitting the value component of the HSV color space of the first image 100 and the value component of the HSV color space of the second image 102.

Accordingly, even if the attachment body 20 and the specific part 22 attached to the attachment body 20 are painted with the same color material, the inspection apparatus 12 of the present embodiment can more appropriately inspect the incorrect attachment of the specific part 22 to the attachment body 20.

Although the embodiment of the disclosure has been described above with reference to the accompanying drawings, needless to say, the disclosure is not limited to the embodiment. It is clear for those skilled in the art to be able to conceive various changes or modifications within the scope of the claims, and they are naturally understood to belong to the technical scope of the disclosure.

For example, an inspection method of determining the incorrect attachment of a part may be provided, in which a specific part 22 is attached to the attachment body 20, and the attachment body 20 and the specific part 22 whose surface is painted with the same color material serve as the inspection target 10. The inspection method includes: imaging the inspection target 10; and determining the incorrect attachment of the specific part 22 in the inspection target 10 based on the inspection image 90 in which the inspection target 10 is captured, and the reference image 60 in which the attachment body 20 and the specific part 22 are captured in a state in which the specific part 22 is correctly attached to the attachment body 20, which is stored in the storage device 42. According to the inspection method, the incorrect attachment of the specific part 22 to the attachment body 20 can be appropriately inspected.

The image processing device 44 illustrated in FIG. 1 can be implemented by circuitry including at least one semiconductor integrated circuit such as at least one processor (e.g., a central processing unit (CPU)), at least one application specific integrated circuit (ASIC), and/or at least one field programmable gate array (FPGA). At least one processor can be configured, by reading instructions from at least one machine readable tangible medium, to perform all or a part of functions of the image processing device 44 including the image processor 80 and the lighting controller 82. Such a medium may take many forms, including, but not limited to, any type of magnetic medium such as a hard disk, any type of optical medium such as a CD and a DVD, any type of semiconductor memory (i.e., semiconductor circuit) such as a volatile memory and a non-volatile memory. The volatile memory may include a DRAM and a SRAM, and the non-volatile memory may include a ROM and a NVRAM. The ASIC is an integrated circuit (IC) customized to perform, and the FPGA is an integrated circuit designed to be configured after manufacturing in order to perform, all or a part of the functions of the modules illustrated in FIG. 1.

## Claims

1. An inspection apparatus configured to inspect an inspection target including an attachment body and a specific part attached to the attachment body, a surface of the attachment body and a surface of the specific part being painted with a same color material, the inspection apparatus comprising:
a storage device configured to store in advance a reference image in which the attachment body and the specific part are captured in a state in which the specific part is correctly attached to the attachment body;
an imaging device configured to capture an inspection image of the inspection target; and
an image processing device configured to determine incorrect attachment of the specific part in the inspection target based on the inspection image captured by the imaging device and the reference image stored in the storage device.

2. The inspection apparatus according to Claim 1,
wherein the image processing device is configured to:
determine the incorrect attachment of the specific part in the inspection target based on a hue component and a saturation component of a hue, saturation, value (HSV) color space of a first image partitioned by a specific area set based on an image of the specific part in the reference image and a hue component and a saturation component of an HSV color space of a second image partitioned in the inspection image by an area corresponding to the specific area while omitting a value component of the HSV color space of the first image and a value component of the HSV color space of the second image.

3. The inspection apparatus according to Claim 2,
wherein a luminance index indicating an average value of red, green, and blue (RGB) values of a pixel in the second image is any value within a range of 150 ± 15 among 256 shades.

4. The inspection apparatus according to any one of Claims 1 to 3, wherein a size of an image of the specific part in the reference image and the inspection image is 14 pixels or more in a vertical direction and 32 pixels or more in a horizontal direction.

5. An inspection method of determining incorrect attachment of a specific part attached to an attachment body, a surface of the attachment body and a surface of the specific part being painted with a same color material, the attachment body and the specific part serving as an inspection target, the inspection method comprising:
capturing an inspection image of the inspection target; and
determining the incorrect attachment of the specific part in the inspection target based on the captured inspection image and a reference image stored in the storage device, the reference image being an image in which the attachment body and the specific part are captured in a state in which the specific part is correctly attached to the attachment body.
